# FASCICULE DE BREVET EUROPEEN

(11) **EP 2 222 525 B1**
(45) Date de publication et mention de la délivrance du brevet: **20.07.2011**
(21) Numéro de dépôt: 07872007.5
(22) Date de dépôt: 20.12.2007
(51) Int. Cl.: B60T 17/22, B60W 10/10, B60W 10/18, B60W 20/00, B60W 10/26

(54) **PROCEDE DE FREINAGE POUR VEHICULES HYBRIDES PERMETTANT LA COMPENSATION D'UN COUPLE DE FREINAGE ELECTRIQUE**
EIN ELEKTRISCHES BREMSMOMENT AUSGLEICHENDES BREMSVERFAHREN FÜR HYBRIDFAHRZEUGE
BRAKING METHOD FOR HYBRID VEHICLES COMPENSATING FOR AN ELECTRIC BRAKING TORQUE

(43) Date de publication de la demande: 01.09.2010
(73) Titulaire: Peugeot Citroën Automobiles Société Anonyme, 78140 Velizy Villacoublay (FR)
(72) Inventeur: MULOT, Vincent, F-75013 Paris (FR); DELPLACE, Rémy, F-90400 Bermont (FR); MECHIN, Olivier, F-70400 VYANS LE VAL (FR); LE NEINDRE, Yvan, F-75017 Paris (FR); THAUVIN, Nicolas, F-78000 Versaillles (FR)
(86) Numéro de dépôt international: PCT/FR2007/052597
(87) Numéro de publication internationale: WO 2009/080901

(56) Documents cités:
- WO-A-2006/051998
- DE-A1-102005 032 196
- FR-A- 2 910 868
- GB-A- 2 386 879
- US-A- 6 155 365
- US-A1- 2003 114 269
- US-A1- 2003 217 876

## Description

L'invention concerne un procédé de freinage pour véhicules hybrides dans lequel un couple de freinage récupératif et un couple de freinage hydraulique sont appliqués aux roues. L'invention a notamment pour but d'assurer la continuité du couple de freinage aux roues, afin de maintenir l'agrément de conduite et la sécurité du véhicule.

L'invention trouve une application particulièrement avantageuse avec les véhicules de type hybride, mais elle pourrait également être mise en oeuvre avec des véhicules tout électriques.

Les systèmes de freinage dans lesquels un couple de freinage récupératif et un couple de freinage hydraulique sont appliqués aux roues sont connus. Le couple de freinage récupératif, dit aussi couple de freinage électrique, est appliqué aux roues par l'action d'une machine électrique jouant un rôle de génératrice pour recharger une batterie à laquelle elle est reliée. Le couple de freinage hydraulique est appliqué aux roues au moyen d'un système hydraulique qui transforme l'appui sur la pédale de frein en une force capable d'actionner des plaquettes (ou un tambour) contre des éléments tournant avec les roues.

Deux types de freinage récupératif existent et sont distingués par la législation européenne de freinage. Le premier type est un système à récupération de catégorie A exerçant un couple de freinage aux roues sans action du conducteur sur la pédale de frein.

Le deuxième type est un système à récupération de catégorie B exerçant un couple freineur commandé par la pédale de frein. L'invention trouve une application avantageuse dans ce type de systèmes. Ces systèmes permettent notamment de découpler l'action sur la pédale de frein, du couple réalisé par le système de freinage hydraulique conventionnel. Ainsi, ils offrent la possibilité de piloter la répartition entre le freinage récupératif réalisé par la chaîne de traction électrique et le freinage hydraulique réalisé par le système de freinage hydraulique conventionnel.

Cette répartition doit se faire de manière transparente et s'adapter automatiquement à des variations du couple de freinage électrique pour des raisons d'agrément de conduite, ainsi que pour satisfaire la réglementation en vigueur pour ce genre de dispositif.

Selon cette réglementation, le système de freinage électrique à récupération de catégorie B peut être seul en action si des variations intrinsèques du couple appliqué sont automatiquement compensées par une variation appropriée du dosage relatif, pour autant que les prescriptions de freinage en adhérence réduite soient satisfaites.

Ainsi, lors d'une demande de freinage par le conducteur, la machine électrique peut réaliser tout ou partie de la consigne de couple, en remplacement (ou complément) du freinage hydraulique classiquement associé à un appui sur la pédale de frein. Le freinage électrique ainsi réalisé permet de récupérer l'énergie cinétique du véhicule, de recharger le système de stockage électrique, puis à terme de réduire la consommation.

Lors de cette phase de freinage, la décélération du véhicule peut être accompagnée d'un changement de rapport d'une transmission automatique à rupture de couple. Lors de ce changement de rapport, la liaison cinématique entre la machine électrique et la roue est rompue.

Le couple de freinage électrique initialement en place est alors annulé le temps du changement de rapport. Ce couple de freinage électrique doit donc être compensé par le système de freinage hydraulique, de manière à conserver un niveau de freinage global du véhicule conforme à la demande du conducteur et à respecter la réglementation citée précédemment.

Du document US 6 155 365, on a connaissance d'un procédé de freinage pour un véhicule hybride conformément au préambule de la revendication 1 où le couple de freinage électrique initialement en place est annulé le temps du changement de rapport, et remplacé par le système de freinage hydraulique, de manière à conserver un niveau de freinage global du véhicule conforme à la demande du conducteur.

De manière analogue, lors d'une phase de freinage, les organes de la chaîne de traction électrique peuvent subir des variations intrinsèques de la puissance absorbée en raison de défaillances éventuelles, de limitations thermique ou encore de l'atteinte de la capacité maximale du système de stockage. De nouveau, la récupération électrique pourra être réduite voire annulée et devra être compensée par le système de freinage hydraulique.

L'invention se propose de résoudre ces problèmes de compensation de couple, de sorte que les variations intrinsèques de la puissance fournie par la chaîne électrique (et donc de couple) demeurent transparentes pour le conducteur conformément à sa demande de freinage et à la réglementation.

A cet effet, selon l'invention, la compensation de couple est réalisée conformément à l'objet de la revendication 1.

Suivant d'autres caractéristiques avantageuses de l'invention :

Lorsque le système de stockage électrique atteint sa capacité maximale de stockage, le système de stockage informe de ce fait le calculateur de la chaîne de traction au moment où il se produit, ou quelques secondes avant qu'il se produise.

Lorsque la machine électrique détecte une défaillance d'un de ses composants ou une limitation thermique maximale atteinte, cette machine électrique informe le calculateur de la chaîne traction de cette défaillance ou de cette température limite atteinte.

Le calculateur de chaîne de traction informe alors le calculateur hydraulique que la capacité de récupération électrique est en baisse voire annulée. Le calculateur de traction informe également le calculateur hydraulique de la valeur de cette réduction du couple électrique.

Enfin, le calculateur hydraulique compense la réduction du couple électrique en actionnant le système de freinage hydraulique, de telle sorte que la demande globale du conducteur soit toujours satisfaite.

On peut distinguer deux modes de compensation liés à l'anticipation ou non de la réduction du couple électrique due à la variation de puissance électrique dans la chaîne de traction.

En effet, dans le cas d'une défaillance ou d'une limitation thermique non anticipée par les organes de la chaîne de traction, la compensation du couple est rapide de manière que la réduction de freinage soit la plus faible et la plus courte possible en regard de la demande du conducteur afin d'assurer sa sécurité.

En revanche, dans le cas d'une réduction anticipée par les composants tels qu'un changement de rapport de la transmission avec rupture de couple ou l'atteinte de la capacité maximale du système de stockage, la compensation pourra intervenir de manière transparente pour le conducteur de manière à assurer le maximum de confort.

L'invention sera mieux comprise à la lecture de la description qui suit et à l'examen des figures qui l'accompagnent. Ces figures ne sont données qu'à titre illustratif mais nullement limitatif de l'invention. Elles montrent :

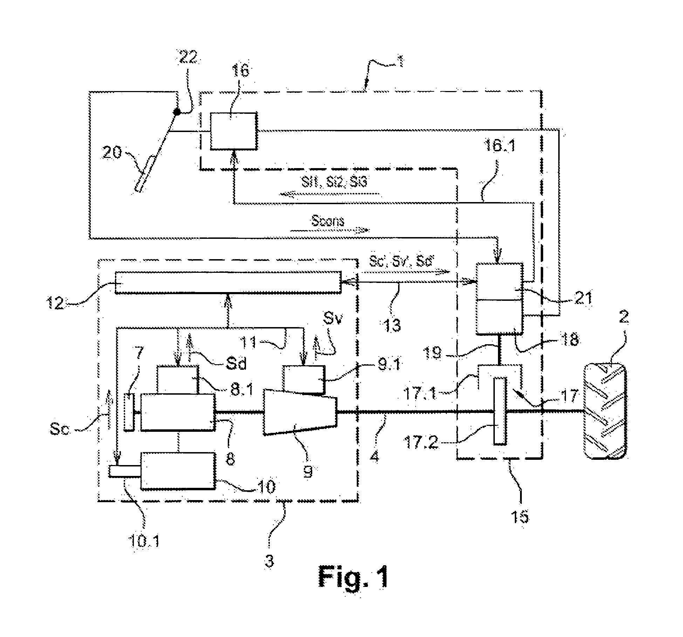

- Figure 1 : une représentation schématique d'un véhicule 1 hybride mettant en oeuvre le procédé de freinage selon l'invention ;
- Figure 2 : un graphe indiquant l'évolution dans le temps des couples de freinage hydraulique et électrique lorsqu'un changement de rapport de vitesse est effectué au cours d'une demande de freinage.

Plus précisément, ce véhicule 1 comporte une roue 2 (les autres roues ne sont pas représentées par souci de simplification) entraînée par une chaîne 3 de traction à laquelle elle est reliée via un arbre 4 de transmission.

La chaîne 3 de traction comporte un moteur 7 thermique et une machine 8 électrique reliés entre eux par l'intermédiaire d'un embrayage (non représenté). En outre, la chaîne 3 de traction comporte une boîte 9 de vitesses automatique à rupture de couple reliée d'une part à la machine 8 électrique et d'autre part à la roue 2 via l'arbre 4.

La machine 8 est également reliée à un système 10 de stockage électrique de type batterie ou super-capacité. La machine 8 électrique transmet un couple moteur à la roue 2 lorsqu'elle fonctionne en mode moteur et qu'elle prélève de la puissance au système 10 de stockage. En revanche, la machine 8 transmet un couple de freinage récupératif lorsqu'elle fonctionne en mode générateur pour recharger le système 10 de stockage et que son arbre est entraîné par la roue 2. Cette phase de recharge se produit notamment lors d'une décélération ou d'un freinage du véhicule.

Un calculateur 12 de chaîne de traction commande le couple appliqué à la roue 2 par la chaîne 3 de traction. A cet effet, le calculateur 12 est relié, via un bus 11 de communication, à des unités de commande 8.1, 9.1, et 10.1 associées respectivement à la machine 8, à la boîte 9 de vitesses et au système 10 de stockage. Le calculateur 12 peut ainsi transmettre des instructions aux unités de commande des organes 8-10, et recevoir de ces unités de commande des informations sur l'état de fonctionnement des organes 8-10 de la chaîne 3 de traction.

Par ailleurs, le véhicule 1 comporte un système 15 de freinage hydraulique délimité sur la figure, par une ligne fermée discontinue. Ce système 15 comporte un système 16 d'actionnement actionnable par le conducteur via la pédale 20 de frein ou de manière automatique par un calculateur 21 de freinage relié au système 16 par une liaison 16.1. Le système 16 transforme une force mécanique engendrée par son actionnement en une pression hydraulique. A cet effet, le système 16 comporte un maître-cylindre et un dispositif d'assistance au freinage par dépression qui amplifie l'effort fourni par le conducteur sur la pédale 20.

Le système 16 est relié à un bloc hydraulique 18. Ce bloc 18 est relié aux freins des roues par l'intermédiaire d'un réseau 19 de canalisations. Ce bloc 18 hydraulique permet de répartir la pression hydraulique engendrée par le système 16 entre des freins du véhicule. A cet effet, le calculateur 21 qui lui est associé, calcule les valeurs de pression à appliquer aux roues du véhicule. Ces valeurs de pressions dépendent des situations de vie du véhicule, et en particulier des vitesses des roues mesurées lors du freinage.

Un dispositif de freinage ou freins 17, couplé à la roue 2, transforme la pression hydraulique qui lui est appliquée au moyen du bloc 18 en une force capable d'actionner les plaquettes 17.1 contre le disque 17.2 tournant avec la roue 2.

Ainsi, la force mécanique engendrée par l'actionnement de la pédale 20 ou de manière automatique, par le calculateur 21, est transformée en une pression hydraulique par le système 16. Cette pression est transmise au bloc 18 hydraulique qui la répartit entre les freins. Et les freins 17 appliquent un couple de freinage mécanique, dit couple hydraulique, aux roues.

Un capteur 22 d'enfoncement de pédale est relié à une entrée du calculateur 21 de freinage. Ce capteur 22 émet un signal Scons relatif au couple de freinage Ccons souhaité par le conducteur. Le calculateur 21 connaît ainsi à chaque instant la volonté de freinage du conducteur.

Les calculateurs 12 et 21 sont reliés entre eux via une liaison 13, de manière à échanger des informations relatives aux couples de freinage électrique eUou hydraulique appliqués aux roues.

Dans des conditions de fonctionnement initiales, le conducteur actionne la pédale de frein 20, de sorte que la machine 8 électrique fonctionnant en générateur applique un couple de freinage électrique au roues. Par ailleurs, un rapport de transmission est figé via la boîte 9 de vitesses automatique, et le système de freinage hydraulique est partiellement ou aucunement en action.

Dès lors, intervient une modification de la puissance de freinage récupératif disponible. Cette modification de la puissance disponible peut se produire notamment dans trois cas de figure décrits ci-dessous.

Dans un premier cas de figure, l'unité 10.1 de commande, associée au système 10 de stockage, détecte que la capacité maximale du système 10 de stockage électrique est atteinte ou bientôt atteinte. L'unité 10.1 de commande émet alors un signal Sc à destination du calculateur 12 de la chaîne de traction via le bus 11 de communication. Dans une mise en oeuvre, ce signal Sc est émis de manière anticipée 2 à 3 secondes avant que la capacité maximale de stockage ne soit réellement atteinte.

Le calculateur 12 reçoit alors le signal Sc et émet un signal Sc' à destination du calculateur 21 hydraulique via la liaison 13. Ce signal Sc' est relatif à la réduction du couple électrique due au fait que la capacité maximale du système 10 de stockage est atteinte ou bientôt atteinte. Ce signal Sc' comporte la valeur dont le couple de freinage électrique diminue lorsque cette capacité maximale est atteinte.

Le calculateur 21 reçoit le signal Sc' et émet alors un signal Si1 de commande à destination du système 16. Ce signal Si1 commande le système 16, de manière que le couple de freinage hydraulique compense la diminution du couple de freinage électrique et que le couple de freinage global souhaité par le conducteur soit respecté.

Le système 16 est commandé de manière que la compensation du couple électrique par le couple hydraulique soit faite de manière transparente pour le conducteur, afin d'assurer un maximum de confort. A cet effet, la compensation du couple est faite de manière progressive. Une telle commande est rendue possible par le fait que l'information relative à l'atteinte de la capacité maximale du système 10 de stockage est transmise au système de freinage hydraulique de manière anticipée.

Dans un deuxième cas de figure, lorsqu'un changement de vitesse est prévu par la boîte 9 de vitesses automatique, l'unité 9.1 de commande, associée à la boîte 9, émet un signal Sv à destination du calculateur 12 via le bus 11 de communication. Dans une mise en oeuvre, ce signal Sv est émis de manière anticipée 100 à 200 millisecondes avant que le changement de vitesse ne se produise réellement.

Le calculateur 12 reçoit alors le signal Sv et émet un signal Sv' à destination du calculateur 21 hydraulique via la liaison 13. Ce signal Sv' est relatif au fait que le couple de freinage électrique va être annulé pendant le changement de vitesse. Le signal Sv' peut comporter la durée du changement de vitesse.

Le calculateur 21 reçoit le signal Sv' et émet alors un signal Si2 de commande à destination du système 16 d'actionnement. Ce signal Si2 commande le système 16, de manière que le couple de freinage hydraulique compense l'annulation du couple de freinage électrique le temps du changement de vitesse et que le couple de freinage global souhaité par le conducteur soit respecté.

Là encore, le système 16 est commandé de manière que la compensation du couple électrique par le couple hydraulique soit faite de manière transparente pour le conducteur, afin d'assurer un maximum de confort. A cet effet, la compensation du couple est faite de manière progressive. Une telle commande est rendue possible par le fait que l'information relative au changement de vitesse est transmise au système de freinage hydraulique de manière anticipée.

Dans un troisième cas de figure, lorsque la machine 8 électrique détecte une défaillance d'un de ses composants ou atteint une température limite de fonctionnement, l'unité 8.1 de commande émet un signal Sd à destination du calculateur 12 via le bus 11 de communication.

Le calculateur 12 reçoit alors le signal Sd et émet un signal Sd' à destination du calculateur 21 hydraulique via la liaison 13. Ce signal Sd' est relatif à la réduction du couple électrique due à la défaillance ou à la surchauffe de la machine 8 électrique. Le signal Sd' comporte la valeur de la réduction du couple électrique ainsi que, en cas de surchauffe, la durée de cette réduction de couple pour que la température de la machine 8 redescende sous la valeur limite.

Le calculateur 21 reçoit le signal Sd' et émet alors un signal Si3 de commande à destination du système 16. Ce signal Si3 commande le système 16, de manière que le couple de freinage hydraulique compense la diminution du couple de freinage électrique et que le couple de freinage global souhaité par le conducteur soit respecté.

La diminution de couple n'étant pas anticipée dans ce cas, le système 16 est commandé de sorte que la réduction de freinage soit la plus faible et la plus courte possible en regard de la demande du conducteur afin d'assurer sa sécurité. A cet effet, la compensation de couple est faite de manière rapide, le couple de freinage hydraulique présentant l'allure d'un échelon.

En variante, le calculateur 12 de chaîne de traction ne transmet pas la valeur de la diminution du couple électrique au calculateur 21 de freinage. Dans ce cas, le calculateur 21 de freinage calcule la différence entre le couple souhaité Ccons par le conducteur et le couple appliqué effectivement aux roues. Le calculateur 21 commande alors le système 16 hydraulique, de sorte que ce système 16 applique un couple de freinage hydraulique aux roues ayant la valeur de cette différence de couple.

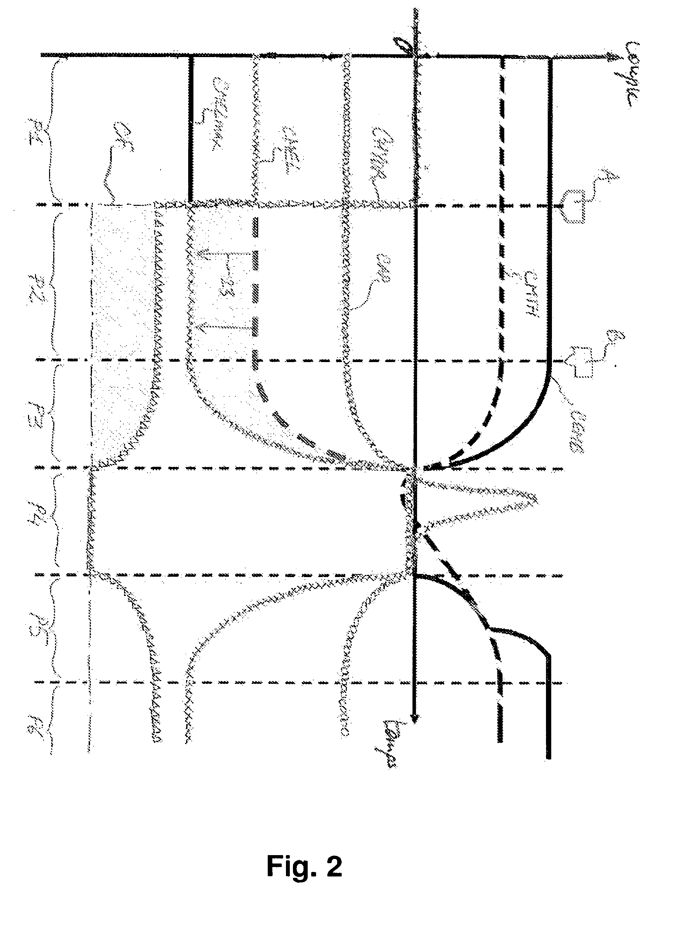

La figure 2 montre un graphe indiquant l'évolution dans le temps du couple CHYDR de freinage hydraulique appliqué par le système de freinage 15, du couple CMEL de freinage électrique appliqué par la machine électrique 8, du couple CMTH du moteur thermique 7, du couple CEMB de l'embrayage, du couple CAP observable sur l'arbre primaire, lorsqu'un changement de rapport est effectué au cours d'un freinage de valeur de couple de consigne CF demandé par le conducteur.

Au cours de la première phase P1, le conducteur a relevé le pied de la pédale d'accélérateur et n'appuie pas sur la pédale de frein 20. La chaîne de traction est en mode de récupération dans lequel la machine électrique 8 fonctionne en génératrice. Le couple de freinage électrique CMEL est inférieur au couple maximal CMELmax disponible sur la machine 8.

Au cours de la deuxième phase P2, le conducteur appuie A sur la pédale de frein 20 de manière à imposer une consigne de couple de freinage CF. Le couple de freinage électrique CMEL augmente 23 alors jusqu'au potentiel maximal CMELmax de la machine électrique 8. Le freinage hydraulique CHYDR complète le couple de freinage CMEL appliqué par la machine électrique 8, de manière que la somme du couple de freinage la machine électrique CMEL et du couple de freinage hydraulique CHYDR soit égale à la consigne de couple de freinage CF demandé par le conducteur (CMEL + CHYDR = CF).

Au cours de la troisième phase P3, un changement de rapport B est demandé. Le couple de l'arbre primaire CAP (qui est égal au couple moteur CMTH et au couple appliqué par la machine électrique CMEL) est alors diminué jusqu'à être annulé afin de pouvoir désengager le rapport initial de boîte de vitesses. La diminution du couple CAP jusqu'au couple nul est effectuée de manière progressive. Le couple de freinage hydraulique CHYDR augmente de manière à compenser la partie du couple électrique CMEL qui avait été ajouté lors de la phase P2. Ainsi le couple de freinage CF commandé par la pédale de frein 20 est toujours respecté.

Au cours de la quatrième phase P4, les couples transmis par la boîte de vitesses sont nuls (CMEL et CMTH sont nuls) de sorte que le changement de rapport peut facilement être effectué, le rapport final étant alors engagé.

Au cours de la cinquième phase P5, les différents couples augmentent progressivement de manière à retrouver la situation de la phase P2. En particulier, le couple de freinage hydraulique CHYDR est de nouveau réduit au fur et à mesure que le couple électrique CMEL est augmenté.

Au cours de la sixième phase P6, les différents couples reprennent les valeurs qu'ils avaient lors de la phase P2.

## Revendications

1. Procédé de freinage pour un véhicule (1), notamment un véhicule hybride, ce véhicule (1) comportant :
- une chaîne (3) de traction formée par un moteur (7) thermique, une machine (8) électrique, et une boîte (9) de vitesses automatique à rupture de couple reliée d'une part à la machine (8) électrique et d'autre part aux roues du véhicule (2), cette chaîne (3) de traction étant commandée par un calculateur (12) de chaîne de traction,
- un système (15) de freinage hydraulique apte à appliquer un couple de freinage hydraulique aux roues (2) au moyen de freins (17), ce système (15) de freinage hydraulique étant commandé par un calculateur (21) de freinage, et
- une pédale (20) de frein qui engendre un couple de freinage appliqué aux roues (2) du véhicule lorsqu'elle est actionnée,
comportant les étapes suivantes :
- la pédale (20) de frein étant actionnée de sorte que la machine (8) électrique applique un couple de freinage électrique aux roues (2),
- lorsqu'un changement de vitesse est prévu par la boîte (9) de vitesses, la boîte (9) de vitesses informe le calculateur (12) de chaîne de traction de ce changement de vitesse,
- le calculateur (12) de chaîne de traction informe alors le calculateur (21) de freinage de l'annulation du couple électrique pendant le changement de vitesse, et
- le calculateur (21) de freinage commande le système (15) de freinage de manière à compenser l'annulation du couple de freinage électrique lors du changement de vitesse,
**caractérisé en ce que** la boîte (9) de vitesses informe le calculateur (12) de traction du changement de vitesse quelques centaines de millisecondes avant que ce changement de vitesse se produise, de sorte que la compensation du couple électrique par le couple de freinage hydraulique soit effectuée de manière progressive.

2. Procédé selon la revendication 1, **caractérisé en ce que** la machine (8) électrique étant reliée à un système (10) de stockage électrique, il comporte les étapes suivantes :
- lorsque le système (10) de stockage atteint sa capacité maximale, le système (10) de stockage informe le calculateur (12) de chaîne de traction que sa capacité maximale de stockage est atteinte,
- le calculateur (12) de chaîne de traction informe alors le calculateur (21) de freinage de la valeur dont le couple de freinage électrique diminue lorsque la capacité maximale du système (10) de stockage est atteinte, et
- le calculateur (21) de freinage commande le système (15) de freinage, de manière à compenser cette diminution du couple de freinage électrique.

3. Procédé selon la revendication 2, **caractérisé en ce que** :
- le système (15) de stockage informe le calculateur (12) de traction que sa capacité maximale de charge est atteinte quelques secondes avant qu'il l'ait atteinte, de sorte que la compensation du couple électrique par le couple de freinage hydraulique se fait de manière progressive.

4. Procédé selon l'une des revendications 1 à 3, **caractérisé en ce que** :
- lorsque la machine (8) électrique détecte une défaillance d'un de ses composants ou atteint une température limite de fonctionnement, cette machine (8) électrique informe le calculateur (12) de chaîne de traction de cette défaillance ou de cette atteinte de température,
- le calculateur (12) de chaîne de traction informe alors le calculateur (21) de freinage de la valeur dont le couple de freinage électrique diminue à cause de cette défaillance ou de l'atteinte de la température limite, et
- le calculateur (21) de freinage commande le système (15) de freinage de manière à compenser cette diminution du couple de freinage électrique.

5. Procédé selon la revendication 4, **caractérisé en ce que** :
- le couple de freinage hydraulique appliqué aux roues en compensation du freinage électrique présente l'allure d'un échelon.

## Claims

1. A braking method for a vehicle (1), in particular a hybrid vehicle, this vehicle (1) comprising:
- a drive system (3) formed by a heat engine (7), an electric machine (8), and an automatic gearbox (9) with torque interrupt connected on the one hand to the electric machine (8) and on the other hand to the wheels (2) of the vehicle, this drive system (3) being controlled by a drive system computer (12),
- a hydraulic braking system (15) able to apply a hydraulic braking torque to the wheels (2) by means of brakes (17), this hydraulic braking system (15) being controlled by a braking computer (21), and
- a brake pedal (20) which produces a braking torque applied to the wheels (2) of the vehicle when it is actuated,
comprising the following stages:
- the brake pedal (20) being actuated so that the electric machine (8) applies an electric braking torque to the wheels (2),
- when a gear change is anticipated by the gearbox (9), the gearbox (9) informs the drive system computer (12) of this gear change,
- the drive system computer (12) then informs the braking computer (21) of the cancellation of the electric torque during the gear change, and
- the braking computer (21) controls the braking system (15) so as to compensate the cancellation of the electric braking torque during the gear change,
**characterized in that** the gearbox (9) informs the drive computer (12) of the gear change a few hundred milliseconds before this gear change occurs, so that the compensation of the electric torque by the hydraulic breaking torque is carried out in a progressive manner.

2. The method according to Claim 1, **characterized in that**, with the electric machine (8) being connected to an electrical storage system (10), it comprises the following stages:
- when the storage system (1) reaches its maximum capacity, the storage system (10) informs the drive system computer (12) that its maximum storage capacity is reached,
- the drive system computer (12) then informs the braking computer (12) of the value by which the electric braking torque decreases when the maximum capacity of the storage system (10) is reached, and
- the braking computer (21) controls the braking system (15) so as to compensate this reduction of the electric braking torque.

3. The method according to Claim 2, **characterized in that**:
- the storage system (15) informs the drive computer (12) that its maximum storage capacity is reached a few seconds before it has reached it, so that the compensation of the electric torque by the hydraulic braking torque is carried out in a progressive manner.

4. The method according to one of Claims 1 to 3, **characterized in that**:
- when the electric machine (8) detects a failure of one of its components or reaches an operating temperature limit, this electric machine (8) informs the drive system computer (12) of this failure or of this temperature having been reached,
- the drive system computer (12) then informs the braking computer (21) of the value by which the electric braking torque decreases due to this failure or the limit temperature having been reached, and
- the braking computer (21) controls the braking system (15) so as to compensate this decrease of the electric braking torque.

5. The method according to Claim 4, **characterized in that**:
- the hydraulic braking torque applied to the wheels in compensation of the electric braking has the character of a step.

## Patentansprüche

1. Bremsverfahren für ein Fahrzeug (1), insbesondere ein Hybridfahrzeug, wobei dieses Fahrzeug (1) Folgendes aufweist:
- eine Antriebskette (3) bestehend aus einem Verbrennungsmotor (7), einer Elektromaschine (8) und einem Automatikschaltgetriebe (9) mit Momentunterbrechung, die einerseits mit der Elektromaschine (8) und andererseits mit den Rädern des Fahrzeugs (2) verbunden ist, wobei diese Antriebskette (3) von einem Antriebskettenrechner (12) gesteuert wird,
- ein hydraulisches Bremssystem (15), das ein hydraulisches Bremsmoment an die Räder (2) mittels Bremsen (17) anlegen kann, wobei dieses hydraulische Bremssystem (15) von einem Bremsrechner (21) gesteuert wird, und
- ein Bremspedal (20), das ein Bremsmoment erzeugt, das bei seinem Betätigen an die Räder (2) des Fahrzeugs angelegt wird,
umfassend die folgenden Schritte:
- das Bremspedal (20) wird derart betätigt, dass die Elektromaschine (8) ein elektrisches Bremsmoment an die Räder (2) anlegt,
- wenn ein Gangwechsel von dem Schaltgetriebe (9) vorgesehen ist, informiert das Schaltgetriebe (9) den Antriebskettenrechner (12) über diesen Gangwechsel,
- der Antriebskettenrechner (12) informiert daher den Bremsrechner (21) über die Annullierung des elektrischen Moments während des Gangwechsels und
- der Bremsrechner (21) steuert das Bremssystem (15) derart, dass die Annullierung des elektrischen Bremsmoments beim Gangwechsel ausgeglichen wird, **dadurch gekennzeichnet, dass** das Schaltgetriebe (9) den Antriebskettenrechner (12) über den Gangwechsel einige Hundertstel Millisekunden vor dem Eintreten dieses Gangwechsels derart informiert, dass der Ausgleich des elektrischen Moments durch das hydraulische Bremsmoment allmählich ausgeführt wird.

2. Verfahren nach Anspruch 1, **dadurch gekennzeichnet, dass**, da die Elektromaschine (8) mit einem elektrischen Speichersystem (10) verbunden ist, das Verfahren die folgenden Schritte aufweist:
- wenn das Speichersystem (10) seine maximale Kapazität erreicht, informiert das Speichersystem (10) den Antriebskettenrechner (12), dass seine maximale Speicherkapazität erreicht ist,
- der Antriebskettenrechner (12) informiert daher den Bremsrechner (21) über den Wert, um den das elektrische Bremsmoment sinkt, während die maximale Speicherkapazität des Speichersystems (10) erreicht ist, und
- der Bremsrechner (21) steuert das Bremssystem (15) derart, dass diese Verringerung des elektrischen Bremsmoments ausgeglichen wird.

3. Verfahren nach Anspruch 2, **dadurch gekennzeichnet, dass**:
- das Speichersystem (10) den Antriebskettenrechner (12) einige Sekunden vor dem Erreichen der maximalen Speicherkapazität informiert, dass seine maximale Speicherkapazität erreicht ist, so dass das Ausgleichen des elektrischen Moments durch das hydraulische Bremsmoment allmählich erfolgt.

4. Verfahren nach einem der Ansprüche 1 bis 3, **dadurch gekennzeichnet, dass**:
- wenn die Elektromaschine (8) ein Versagen eines ihrer Bauteile erfasst oder eine Betriebsgrenztemperatur erreicht, diese Elektromaschine (8) den Antriebskettenrechner (12) über dieses Versagen oder dieses Temperaturerreichen informiert,
- der Antriebskettenrechner (12) den Bremsrechner (21) über den Wert informiert, um den das elektrische Bremsmoment aufgrund dieses Versagens oder des Erreichens der Grenztemperatur sinkt, und
- der Bremsrechner (21) das Bremssteuersystem (15) derart steuert, dass diese Verringerung des elektrischen Bremsmoments ausgeglichen wird.

5. Verfahren nach Anspruch 4, **dadurch gekennzeichnet, dass**:
- das hydraulische Bremsmoment, das an die Räder zum Ausgleichen des elektrischen Bremsens angelegt wird, einen Gang einer Stufe darstellt.
